# FASCICULE DE BREVET EUROPEEN

(11) **EP 2 961 590 B1**
(45) Date de publication et mention de la délivrance du brevet: **05.04.2017**
(21) Numéro de dépôt: 14713191.6
(22) Date de dépôt: 26.02.2014
(51) Int. Cl.: B29C 33/00, B29C 70/48, F01D 25/24

(54) **MOULE D'INJECTION POUR LA FABRICATION D'UNE PIECE DE REVOLUTION EN MATERIAU COMPOSITE AYANT DES BRIDES EXTERNES, ET NOTAMMENT D'UN CARTER DE TURBINE A GAZ**
SPRITZGIESSWERKZEUG ZUR HERSTELLUNG EINES ROTIERENDEN TEILS AUS EINEM VERBUNDSTOFF MIT EXTERNEN FLANSCHEN, INSBESONDERE FÜR EIN GASTURBINENGEHÄUSE
INJECTION MOULD FOR MANUFACTURING A ROTARY PART MADE OF A COMPOSITE MATERIAL HAVING EXTERNAL FLANGES, IN PARTICULAR OF A GAS TURBINE CASING

(30) Priorité: 01.03.2013 FR 1351862
(43) Date de publication de la demande: 06.01.2016
(73) Titulaire: SAFRAN, 75015 Paris (FR)
(72) Inventeur: CHAUVIN, Thierry, F-60950 Ermenonville (FR)
(74) Mandataire: Desormiere, Pierre-Louis
(86) Numéro de dépôt international: PCT/FR2014/050416
(87) Numéro de publication internationale: WO 2014/131992

(56) Documents cités:
- WO-A1-2011/161380
- FR-A1- 2 958 875

## Description

### Arrière-plan de l'invention

La présente invention se rapporte au domaine général de la fabrication en matériau composite de pièces de révolution ayant des brides externes, notamment des carters de turbine à gaz, et plus particulièrement des carters de rétention pour soufflante de turbine à gaz pour moteurs aéronautiques.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Selon cette invention, la texture fibreuse est réalisée par tissage tridimensionnel avec épaisseur évolutive et est enroulée en plusieurs couches superposées sur un mandrin ayant une paroi centrale de profil correspondant à celui du carter à fabriquer et deux flasques latéraux de profil correspondant à ceux des brides externes du carter. L'enroulement sur un mandrin d'une texture tissée d'épaisseur évolutive comme décrit dans ce document permet de disposer directement d'une préforme tubulaire ayant le profil désiré avec épaisseur variable.

Différentes cales de fermeture sont ensuite appliquées sur le renfort fibreux enroulé sur le mandrin. Les cales de fermeture et le mandrin forment ainsi un moule d'injection à l'intérieur duquel une résine est injectée avant d'être polymérisée. L'injection de la résine dans le moule d'injection peut ainsi s'effectuer par un processus d'injection de type LCM (pour « Liquid Composite Molding »), et notamment de type RTM (« Resin Transfer Molding » pour moulage par transfert de résine).

En pratique, la réalisation des moules d'injection pour la fabrication d'un carter de turbine à gaz en matériau composite pose le problème de garantir une parfaite étanchéité du moule. Or, les moules d'injection connus de l'art antérieur présentent l'inconvénient de multiplier les points d'étanchéité. En particulier, il est généralement nécessaire d'avoir à traiter l'étanchéité élément par élément, chaque élément du moule ayant à sa périphérie un joint d'étanchéité en contact avec les éléments attenants du moule. De plus, pour certains de ces éléments du moule d'injection, l'étanchéité doit être réalisée sur des surfaces non planes, ce qui complique d'autant la réalisation de l'étanchéité du moule.

Un moule d'injection pour fabrication d'une pièce de révolution en matériau composite est décrit dans le document FR 2 958 875.

### Objet et résumé de l'invention

Il existe donc un besoin de pouvoir disposer d'un moule d'injection pour la fabrication d'une pièce de révolution en matériau composite ayant des brides externes dans lequel la réalisation de l'étanchéité soit simplifiée en limitant le nombre de points d'étanchéité et en ayant recours exclusivement à des surfaces d'étanchéité planes.

Conformément à l'invention, ce but est atteint grâce à un moule d'injection comprenant un mandrin axisymétrique sur lequel est destiné à être maintenu un renfort fibreux formé par des couches superposées d'une texture fibreuse, le mandrin comportant une paroi annulaire centrale dont le profil correspond à celui de la pièce à fabriquer et deux flasques latéraux dont les profils correspondent à ceux des brides externes de la pièce à fabriquer, des cales de moulage destinées à venir en appui contre une surface non recouverte du renfort fibreux, et deux cloches externes axisymétriques destinées à venir recouvrir les cales de moulage et les flasques du mandrin avec interposition de joints d'étanchéité toriques entre les cloches et les flasques du mandrin, les cloches étant munies chacune d'une bride de fixation, les brides de fixation des cloches étant serrées l'une contre l'autre selon une direction sensiblement parallèle à un axe de symétrie du mandrin, dans lesquelles les cloches externes recouvrent les cales de moulage et les flasques du mandrin avec interposition de joints d'étanchéité toriques entre les cloches et les flasques du mandrin et en ce que les brides de fixation des cloches viennent en appui l'une contre l'autre avec interposition d'au moins un joint d'étanchéité torique.

L'étanchéité du moule d'injection est réalisée selon un nombre limité de points d'étanchéité, notamment entre les cloches et les flasques du mandrin et entre les deux cloches. En outre, ces étanchéités peuvent être obtenues entre des surfaces planes par l'intermédiaire de simples joints d'étanchéité toriques. La mise en place de l'étanchéité du moule d'injection s'en trouve grandement simplifié.

Selon une disposition avantageuse, deux joints d'étanchéité toriques sont interposés entre chaque cloche et le flasque correspondant du mandrin et deux joints d'étanchéité toriques sont interposés entre les brides de fixation respectives des cloches.

Le doublement des joints d'étanchéité au niveau des différents points d'étanchéité permet de pouvoir rapidement identifier l'emplacement d'une fuite. En effet, avec une telle disposition, en cas de fuite (c'est-à-dire en cas de perte d'étanchéité après l'étape de mise sous vide), on effectue, pour chaque point d'étanchéité du moule, une mise sous vide du volume délimité par les deux joints ce qui permet d'identifier quel point d'étanchéité du moule est défaillant. Une telle opération ne nécessite notamment pas d'avoir à défaire l'ensemble des points d'étanchéité pour identifier lequel est défaillant.

Le mandrin peut être réalisé en deux parties distinctes en appui l'une contre l'autre avec interposition d'au moins un joint d'étanchéité torique, chaque partie comportant l'un des flasques du mandrin. Dans ce cas, deux joints d'étanchéité toriques sont avantageusement interposés entre les deux parties distinctes du mandrin. Ainsi, avant même de commencer le bobinage de la texture fibreuse sur le mandrin du moule, il est possible de contrôler la qualité de l'étanchéité entre les deux parties qui le constituent.

Chaque cloche peut comprendre en outre une partie radiale destinée à venir en appui axial contre un flasque du mandrin, et une partie axiale destinée à venir en appui radial contre une ou plusieurs cales de moulage.

Les cales de moulage peuvent comprendre des cales de coin destinées à venir en appui contre la partie du renfort fibreux recouvrant les angles formés entre la paroi centrale et les flasques du mandrin et au moins une cale centrale destinée à venir en appui contre la partie du renfort fibreux recouvrant la paroi centrale du mandrin. Dans ce cas, les cales de coin et la cale centrale sont de préférence formées de plusieurs segments angulaires de cales mis bout à bout.

L'invention a également pour objet un procédé de moulage par injection pour la fabrication d'une pièce de révolution en matériau composite ayant des brides externes, comprenant l'enroulement d'une texture fibreuse en couches superposées sur le mandrin d'un moule d'injection tel que défini précédemment, la mise en place des cales de moulage du moule d'injection contre une surface non recouverte du renfort fibreux ainsi formé, le recouvrement des cales de moulage et des flasques du mandrin par les cloches du moule d'injection avec interposition des joints d'étanchéité toriques entre les cloches et les flasques du mandrin, l'injection d'une résine dans le moule d'injection, et la polymérisation de la résine.

L'invention a encore pour objet l'application du procédé tel que défini ci-dessus au moulage par injection d'une pièce de révolution pour la fabrication d'un carter de turbine à gaz en matériau composite.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une demi-vue en coupe longitudinale d'un moule d'injection selon l'invention ; et
- la figure 2 est une vue en perspective et en éclaté du moule d'injection de la figure 1.

### Description détaillée de l'invention

L'invention sera décrite ci-après dans le cadre de son application à la fabrication d'un carter de soufflante de moteur aéronautique à turbine à gaz. De manière plus générale, l'invention s'applique à la fabrication de toute pièce de révolution ayant à ses extrémités axiales des brides faisant saillies vers l'extérieur.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxyde, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

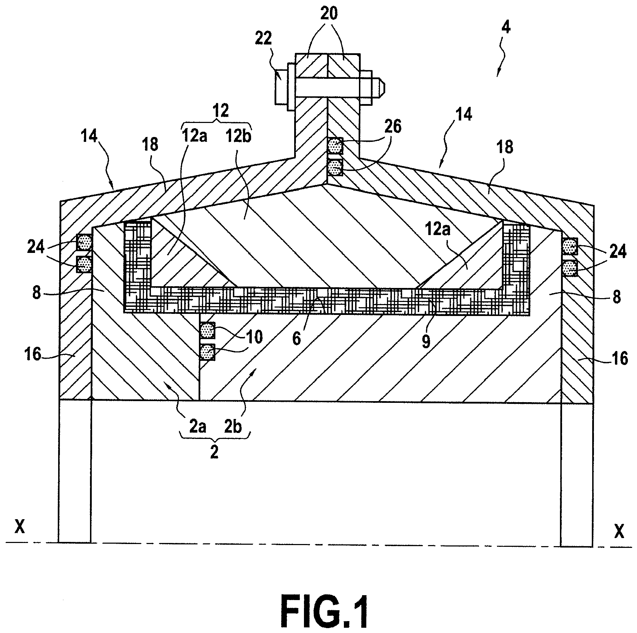

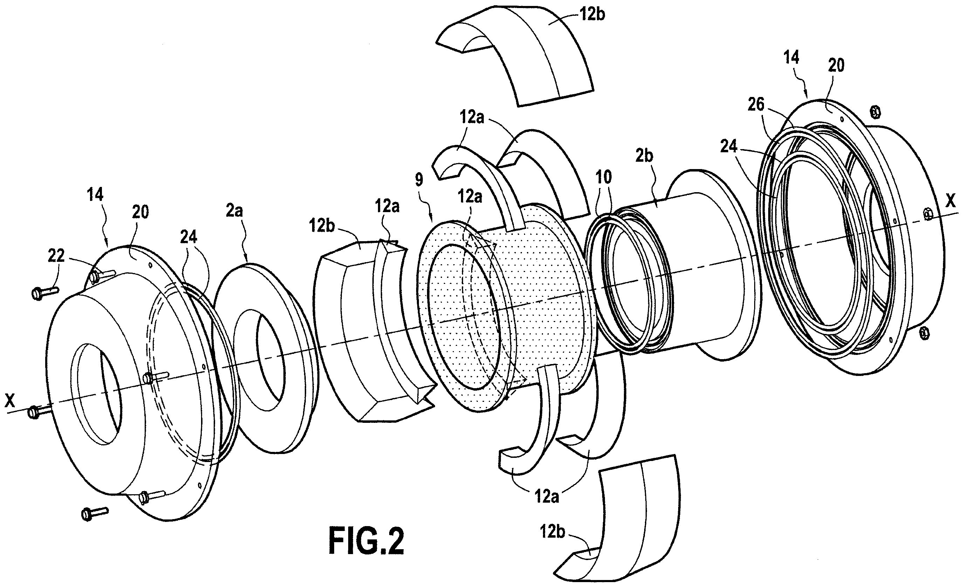

La texture fibreuse ainsi réalisée est ensuite transférée sur le mandrin 2 d'un moule d'injection 4 conforme à l'invention et tel que celui représenté sur les figures 1 et 2.

En pratique, la texture fibreuse est enroulée en plusieurs couches superposées sur le mandrin du moule d'injection. Lorsque la texture fibreuse a fini d'être enroulée sur le mandrin, le moule d'injection est fermé par un contre-moule. Un vide d'air est alors créé à l'intérieur du moule et une résine y est injectée par un processus d'injection de type RTM. Une fois la résine polymérisée, le moule d'injection est ouvert et le renfort fibreux densifié par la matrice est démoulé.

Comme représenté sur les figures 1 et 2, le mandrin 2 du moule d'injection 4 selon l'invention est une pièce d'axe de symétrie X-X ayant une paroi annulaire centrale 6 dont le profil correspond à celui du carter à fabriquer et deux flasques latéraux 8 dont les profils correspondent à ceux de brides externes du carter à fabriquer.

Le mandrin 2 du moule d'injection est réalisé en deux parties 2a, 2b distinctes qui sont fixées en appui axial l'une contre l'autre, chaque partie comportant une portion de la paroi centrale 6 et l'un des flasques 8 du mandrin. La réalisation du mandrin en deux parties permet d'assurer un démoulage du renfort fibreux 9 après polymérisation de la résine.

Au moins un joint d'étanchéité torique 10 est interposé entre les deux parties 2a, 2b du mandrin pour réaliser une étanchéité entre ces deux éléments du moule d'injection. Ce joint torique est centré sur l'axe de symétrie X-X du mandrin.

Une fois la texture fibreuse enroulée en plusieurs couches superposées sur le mandrin 2, le moule d'injection 4 est fermé par l'intermédiaire d'un contre-moule.

Plus précisément, des cales de moulage 12 sont d'abord positionnées sur la surface non recouverte du renfort fibreux. Ces cales de moulage consistent en des cales de coin 12a destinées à venir en appui contre la partie du renfort fibreux recouvrant les angles formés entre la paroi centrale 6 et les flasques 8 du mandrin et une cale centrale 12b destinée à venir en appui contre la partie du renfort fibreux recouvrant la paroi centrale du mandrin.

Les cales de coin 12a et la cale centrale 12b sont sectorisées, c'est-à-dire qu'elles sont chacune formées de plusieurs segments angulaires de cales qui sont mis bout à bout pour recouvrir la texture fibreuse sur toute sa circonférence. Par exemple, comme représenté sur la figure 2, ces segments peuvent être au nombre de 3 par cale mais peuvent être plus nombreux (notamment 6 segments par cale).

Une fois le renfort fibreux 9 enroulé sur le mandrin 2 et les cales de moulage 12 disposées sur la surface non recouverte de celui-ci, l'étape suivante de fermeture du moule d'injection consiste à appliquer deux cloches externes 14 sur l'ensemble ainsi formé.

Les cloches externes 14 sont des pièces axisymétriques centrées sur l'axe de symétrie X-X du mandrin. Elles viennent recouvrir les cales de moulage 12 et les flasques 8 du mandrin.

En particulier, chaque cloche externe 14 comprend une partie radiale 16 qui vient en appui axial contre l'un des flasques 8 du mandrin et qui se prolonge par une partie axiale 18 venant en appui radial contre une ou plusieurs cales de moulage 12.

Cette partie axiale 18 se termine par une bride de fixation 20 qui vient en appui axial contre la bride de fixation de l'autre cloche externe, ces deux brides de fixation étant serrées l'une contre l'autre selon une direction sensiblement parallèle à l'axe de symétrie X-X du mandrin par l'intermédiaire de moyens de serrage tels que des systèmes de type vis/écrous 22 comme représenté sur les figures ou des systèmes à base de vérins hydrauliques.

On notera que les cloches externes 14 du moule d'injection peuvent être identiques en forme et en dimensions.

Par ailleurs, les cloches externes sont assemblées sur le mandrin 2 avec interposition de joints d'étanchéité toriques. En particulier, au moins un joint d'étanchéité torique 24 est positionné entre chaque partie radiale 16 des cloches et le flasque 8 du mandrin correspondant. De même, au moins un joint d'étanchéité torique 26 est interposé entre les brides de fixation 20 respectives des cloches 14.

On notera que ces joints d'étanchéité 24, 26 sont centrés sur l'axe de symétrie X-X du mandrin et qu'ils sont logés dans des gorges annulaires formées dans les cloches externes 14. Bien entendu, ces joints d'étanchéité pourraient aussi être logés dans des gorges pratiquées dans le mandrin du moule d'injection.

Ainsi, le moule d'injection 4 selon l'invention ne comporte que quatre points d'étanchéité, à savoir le point d'étanchéité entre les deux parties 2a, 2b du mandrin 2, les deux points d'étanchéité entre les deux cloches 14 et les deux flasques 8 du mandrin, et le point d'étanchéité entre les deux brides de fixation 20 des cloches. En outre, l'étanchéité au niveau de ces points est aisée à réaliser puisqu'elle s'effectue entre des surfaces annulaires qui sont planes.

On notera également qu'avec un tel moule d'injection aucune étanchéité n'est requise entre les différentes cales de moulage 12.

De préférence, les différents joints d'étanchéité du moule d'injection sont doublés, c'est-à-dire que les joints d'étanchéité 10, 24 et 26 sont au nombre de deux. Pour des joints d'étanchéité toriques ayant un diamètre d'environ 2m, la distance entre les deux joints d'un même point d'étanchéité est typiquement comprise entre 15 et 50mm environ.

Le doublement des joints d'étanchéité au niveau des différents points d'étanchéité permet ainsi de pouvoir rapidement identifier l'emplacement d'une fuite. En pratique, en cas d'apparition d'une fuite au cours de l'étape de mise sous vide du moule d'injection, on effectue, pour chaque point d'étanchéité du moule, une mise sous vide du volume délimité par les deux joints. Cette opération permet d'identifier quel point d'étanchéité du moule est défaillant et quel joint doit être remplacé. Une telle opération ne nécessite notamment pas de défaire l'ensemble des points d'étanchéité pour identifier lequel est défaillant.

De plus, avant même de commencer l'enroulement des couches de texture fibreuse sur le mandrin du moule, il est possible, grâce à une telle opération de mise sous vide du volume délimité entre les deux joints d'étanchéité 10, de contrôler la qualité de l'étanchéité entre les deux parties 2a, 2b qui constituent le mandrin.

Enfin, la mise sous vide des volumes délimités entre chaque paire de joints d'étanchéité permet d'apporter un effort de compactage sur le renfort fibreux non négligeable. Il a en effet été calculé que l'effort de bridage obtenu par une telle mise sous vide (de l'ordre de 0,9 bar) peut résulter en une force de compactage généré sur les cales de moulage de l'ordre de 10000 Newton.

## Revendications

1. Moule d'injection (4) pour la fabrication d'une pièce de révolution en matériau composite ayant des brides externes, comprenant :
un mandrin (2) axisymétrique sur lequel est destiné à être maintenu un renfort fibreux (9) formé par des couches superposées d'une texture fibreuse, le mandrin comportant une paroi annulaire centrale (6) dont le profil correspond à celui de la pièce à fabriquer et deux flasques latéraux (8) dont les profils correspondent à ceux des brides externes de la pièce à fabriquer ;
des cales de moulage (12) destinées à venir en appui contre une surface non recouverte du renfort fibreux ; et
deux cloches externes (14) axisymétriques destinées à venir recouvrir les cales de moulage et les flasques du mandrin, les cloches étant munies chacune d'une bride de fixation (20), les brides de fixation des cloches étant serrées l'une contre l'autre selon une direction sensiblement parallèle à un axe de symétrie (X-X) du mandrin,
**caractérisé en ce que** les cloches externes recouvrent les cales de moulage et les flasques du mandrin avec interposition de joints d'étanchéité toriques (24) entre les cloches et les flasques du mandrin et **en ce que** les brides de fixation des cloches viennent en appui l'une contre l'autre avec interposition d'au moins un joint d'étanchéité torique (26).

2. Moule d'injection selon la revendication 1, dans lequel deux joints d'étanchéité toriques (24) sont interposés entre chaque cloche (14) et le flasque (8) correspondant du mandrin et deux joints d'étanchéité toriques (26) sont interposés entre les brides de fixation (20) respectives des cloches.

3. Moule d'injection selon l'une des revendications 1 et 2, dans lequel le mandrin (2) est réalisé en deux parties distinctes (2a, 2b) en appui l'une contre l'autre avec interposition d'au moins un joint d'étanchéité torique (10), chaque partie comportant l'un des flasques (8) du mandrin.

4. Moule d'injection selon la revendication 3, dans lequel deux joints d'étanchéité toriques (10) sont interposés entre les deux parties distinctes (2a, 2b) du mandrin.

5. Moule d'injection selon l'une quelconque des revendications 1 à 4, dans lequel chaque cloche (14) comprend en outre une partie radiale (16) destinée à venir en appui axial contre un flasque (8) du mandrin, et une partie axiale (18) destinée à venir en appui radial contre une ou plusieurs cales de moulage (12).

6. Moule d'injection selon l'une quelconque des revendications 1 à 5, dans lequel les cales de moulage (12) comprennent des cales de coin (12a) destinées à venir en appui contre la partie du renfort fibreux recouvrant les angles formés entre la paroi centrale (6) et les flasques (8) du mandrin et au moins une cale centrale (12b) destinée à venir en appui contre la partie du renfort fibreux recouvrant la paroi centrale du mandrin.

7. Moule d'injection selon la revendication 6, dans lequel les cales de coin (12a) et la cale centrale (12b) sont formées de plusieurs segments angulaires de cales mis bout à bout.

8. Procédé de moulage par injection pour la fabrication d'une pièce de révolution en matériau composite ayant des brides externes, comprenant :
l'enroulement d'une texture fibreuse (9) en couches superposées sur le mandrin (2) d'un moule d'injection (2) selon l'une quelconque des revendications 1 à 7 ;
la mise en place des cales de moulage (12) du moule d'injection contre une surface non recouverte du renfort fibreux ainsi formé ;
le recouvrement des cales de moulage et des flasques du mandrin par les cloches du moule d'injection avec interposition des joints d'étanchéité toriques (24) entre les cloches et les flasques (8) du mandrin ;
l'injection d'une résine dans le moule d'injection ; et
la polymérisation de la résine.

9. Application du procédé selon la revendication 8 au moulage par injection d'une pièce de révolution pour la fabrication d'un carter de turbine à gaz en matériau composite.

## Patentansprüche

1. Spritzgussform (4) für die Herstellung eines Rotationsteils aus Verbundwerkstoff, das Außenflansche aufweist, umfassend:
einen achsensymmetrischen Dorn (2), welcher dazu bestimmt ist, hieran eine durch übereinander angeordnete Lagen einer Faserstruktur gebildete Faserverstärkung (9) zu halten, wobei der Dorn eine mittlere ringförmige Wand (6), deren Profil demjenigen des herzustellenden Teils entspricht, und zwei Seitenflansche (8), deren Profile denjenigen der Außenflansche des herzustellenden Teils entsprechen, umfasst,
Formkeile (12), welche dazu bestimmt sind, an einer nicht von der Faserverstärkung bedeckten Fläche in Anlage zu kommen, und
zwei achsensymmetrische äußere Glocken (14), welche dazu bestimmt sind, die Formkeile und die Flansche des Dorns zu bedecken, wobei die Glocken jeweils mit einem Befestigungsflansch (20) versehen sind, wobei die Befestigungsflansche der Glocken in einer zu einer Symmetrieachse (X-X) des Dorns im Wesentlichen parallelen Richtung gegeneinander gespannt sind,
**dadurch gekennzeichnet, dass** die äußeren Glocken die Formkeile und die Flansche des Dorns unter Zwischenlegen von O-Ring-Dichtungen (24) zwischen die Glocken und die Flansche des Dorns bedecken und dass die Befestigungsflansche der Glocken unter Zwischenlegen wenigstens einer O-Ring-Dichtung (26) aneinander in Anlage kommen.

2. Spritzgussform nach Anspruch 1, bei der zwei O-Ring-Dichtungen (24) zwischen jeder Glocke (14) und dem entsprechenden Flansch (8) des Dorns eingefügt sind und zwei O-Ring-Dichtungen (26) zwischen den jeweiligen Befestigungsflanschen (20) der Glocken eingefügt sind.

3. Spritzgussform nach einem der Ansprüche 1 und 2, bei der der Dorn (2) aus zwei separaten Teilen (2a, 2b), welche unter Zwischenlegen wenigstens einer O-Ring-Dichtung (10) in Anlage aneinander sind, gefertigt ist, wobei jedes Teil einen der Flansche (8) des Dorns umfasst.

4. Spritzgussform nach Anspruch 3, bei der zwei O-Ring-Dichtungen (10) zwischen den beiden separaten Teilen (2a, 2b) des Dorns eingefügt sind.

5. Spritzgussform nach einem der Ansprüche 1 bis 4, bei der jede Glocke (14) ferner einen radialen Teil (16), der dazu bestimmt ist, an einem Flansch (8) des Dorns in axiale Anlage zu kommen, sowie einen axialen Teil (18), der dazu bestimmt ist, an einem oder mehreren Formkeilen (12) in radiale Anlage zu kommen, umfasst.

6. Spritzgussform nach einem der Ansprüche 1 bis 5, bei der die Formkeile (12) Eckkeile (12a), die dazu bestimmt sind, an dem Teil der Faserverstärkung, welcher die zwischen der mittleren Wand (6) und den Flanschen (8) des Dorns gebildeten Ecken bedeckt, in Anlage zu kommen, sowie wenigstens einen mittleren Keil (12b), der dazu bestimmt ist, an dem Teil der Faserverstärkung, welcher die mittlere Wand des Dorns bedeckt, in Anlage zu kommen, umfassen.

7. Spritzgussform nach Anspruch 6, bei der die Eckkeile (12a) und der mittlere Keil (12b) von mehreren aneinander gefügten winkelförmigen Keilsegmenten gebildet sind.

8. Spritzgießverfahren für die Herstellung eines Rotationsteils aus Verbundwerkstoff, das Außenflansche aufweist, umfassend:
das Wickeln einer Faserstruktur (9) aus übereinander angeordneten Lagen um den Dorn (2) einer Spritzgussform (2) nach einem der Ansprüche 1 bis 7,
das Anbringen der Formkeile (12) der Spritzgussform an einer Fläche, die nicht von der so gebildeten Faserverstärkung bedeckt ist,
das Abdecken der Formkeile und der Flansche des Dorns mit den Glocken der Spritzgussform unter Zwischenlegen der O-Ring-Dichtungen (24) zwischen die Glocken und die Flansche (8) des Dorns,
das Einspritzen eines Harzes in die Spritzgussform und
das Polymerisieren des Harzes.

9. Anwendung des Verfahrens nach Anspruch 8 auf das Spritzgießen eines Rotationsteils für die Herstellung eines Gasturbinengehäuses aus Verbundwerkstoff.

## Claims

1. An injection mold (4) for manufacturing a rotary part made of a composite material having outer flanges, comprising:
an axisymmetric mandrel (2) on which a fiber reinforcement (9) formed by superimposed layers of a fiber texture is intended to be supported, the mandrel including a central annular wall (6) the profile of which matches that of the part to be manufactured and two side plates (8) the profiles of which match those of the outer flanges of the part to be manufactured;
molding wedges (12) for bearing against a non-covered surface of the fiber reinforcement; and
two axisymmetric outer bells (14) for covering the molding wedges and the plates of the mandrel with sealing O-rings (24) being inserted between the bells and the plates of the mandrel, the bells each being provided with an attachment flange (20) for bearing against one another with at least one sealing O-ring (26) inserted therebetween, the attachment flanges of the bells being clamped against one another in a direction substantially parallel to an axis of symmetry (X-X) of the mandrel.

2. The injection mold according to claim 1, wherein two sealing O-rings (24) are inserted between each bell (14) and the corresponding plate (8) of the mandrel and two sealing O-rings (26) are inserted between the respective attachment flanges (20) of the bells.

3. The injection mold according to one of claims 1 and 2, wherein the mandrel (2) is made of two separate parts (2a, 2b) bearing against one another with at least one sealing O-ring (10), therebetween, each part including one of the plates (8) of the mandrel.

4. The injection mold according to claim 3, wherein two sealing O-rings (10) are inserted between the two separate parts (2a, 2b) of the mandrel.

5. The injection mold according to any one of claims 1 to 4, wherein each bell (14) further comprises a radial part (16) for axially bearing against a plate (8) of the mandrel, and an axial part (18) for radially bearing against one or more molding wedges (12).

6. The injection mold according to any one of claims 1 to 5, wherein the molding wedges (12) comprise corner wedges (12a) for bearing against the part of the fiber reinforcement covering the angles formed between the central wall (6) and the plates (8) of the mandrel and at least one central wedge (12b) for bearing against the part of the fiber reinforcement covering the central wall of the mandrel.

7. The injection mold according to claim 6, wherein the corner wedges (12a) and the central wedge (12b) are formed from several angular segments of wedges placed end to end.

8. An injection molding method for manufacturing a rotary part made of a composite material having outer flanges, comprising:
winding a fiber texture (9) in superimposed layers on the mandrel (2) of an injection mold (2) according to any one of claims 1 to 7;
fitting the molding wedges (12) of the injection mold against a non-covered surface of the fiber reinforcement thus formed;
covering the molding wedges and the plates of the mandrel by the bells of the injection mold with sealing O-rings (24) inserted between the bells and the plates (8) of the mandrel;
injection of a resin into the injection mold; and
polymerization of the resin.

9. An application of the method according to claim 8 to the injection molding of a rotary part for manufacturing a gas turbine casing made of a composite material.
